# FASCICULE DE BREVET EUROPEEN

(11) **EP 3 983 220 B1**
(45) Date de publication et mention de la délivrance du brevet: **06.09.2023**
(21) Numéro de dépôt: 20731089.7
(22) Date de dépôt: 10.06.2020
(51) Int. Cl.: B32B 17/10, H01Q 1/12, H01Q 23/00, B60S 1/08

(54) **VITRAGE FEUILLETE INTEGRANT LES ANTENNES DU SYSTEME AUTOMATIQUE D'AIDE A L'ATTERRISSAGE**
LAMINIERTE VERGLASUNG MIT DARIN INTEGRIERTEN ANTENNEN EINES AUTOMATISCHEN LANDEHILFSSYSTEMS
LAMINATED GLAZING INCORPORATING THE ANTENNAS OF THE AUTOMATIC LANDING ASSISTANCE SYSTEM

(30) Priorité: 13.06.2019 FR 1906273
(43) Date de publication de la demande: 20.04.2022
(73) Titulaire: Saint-Gobain Glass France, 92400 Courbevoie (FR)
(72) Inventeur: LEGOIS, Vincent, 45110 GERMIGNY DES PRES (FR); RACHET, Vincent, 45590 SAINT CYR EN VAL (FR)
(74) Mandataire: Saint-Gobain Recherche
(86) Numéro de dépôt international: PCT/EP2020/066029
(87) Numéro de publication internationale: WO 2020/249589

(56) Documents cités:
- EP-A1- 0 608 180
- WO-A1-2017/178146

## Description

La présente invention a trait au domaine des aéronefs pressurisés ou non pressurisés à voilure fixe ou tournante, tels qu'avions commerciaux, civils (type Airbus A320 ou Boeing 737) ou militaires, hélicoptères, navettes spatiales qui utilisent aujourd'hui le système automatique d'aide à l'atterrissage ILS (Instrument Landing System) permettant une approche de précision (guidage plans vertical et horizontal) même avec des conditions météorologiques dégradées. Ces antennes sont généralement placées dans le nez de l'avion derrière le radôme. Elles sont connectées au calculateur de vol par des câbles coaxiaux.

Ce système est basé sur deux antennes :
- une antenne LOC (Localizer) recevant dans la bande VHF à une fréquence proche de 110 MHz (entre 108,10 MHz et 111,95 MHz) ;
- une antenne GLIDE (Slope) utilisant des fréquences UHF comprises entre 328.65 MHz et 335.40 MHz.

Ce système de deux antennes reçoit du sol des informations de guidage dans les plans vertical et horizontal et les transmet au calculateur de vol pour l'approche finale (atterrissage) notamment. Il peut être constitué d'une antenne unique appelée antenne ILS dans la suite.

L'antenne ILS peut également être installée dans la porte du train avant d'atterrissage, comme décrit dans la demande EP 0 706 722 A1. Elle utilise alors les propriétés électriques inhérentes associées à la porte du train avant d'atterrissage en composite graphite/époxy.

Les avions peuvent également être équipés d'autres antennes (GPS, WIFI) dont l'implantation peut avoir des répercussions importantes sur l'aérodynamisme et/ou la masse de l'avion. En intégrant des antennes planaires minces dans les vitrages (pare-brise, glaces latérales de cockpit, hublots passagers) il devient possible de gagner de la masse en réduisant le nombre d'éléments (antennes, câbles...) à installer sur le fuselage.

Aujourd'hui aucune sorte d'antenne (ILS, GPS) n'est intégrée dans les vitrages des cockpits d'avion. Or les inventeurs se sont aperçus de l'intérêt remarquable d'intégrer certaines antennes dans des vitrages de véhicules aériens, notamment avions, hélicoptères, notamment à l'avant des véhicules pour garantir une bonne réception des signaux. Ainsi l'intégration d'une antenne dans un vitrage à l'avant du véhicule, notamment un vitrage de cockpit, présente l'avantage de réduire la longueur des câbles (donc le poids) pour relier l'antenne au calculateur de vol.

Ces antennes nécessitent une connectique qui doit être intégrée au vitrage. Cela doit donc être réalisé dans les règles de l'art afin de ne pas créer de zone de fragilisation et ne pas dégrader la tenue du vitrage au vieillissement (pénétration d'humidité, corrosion de la connectique...).

Les signaux doivent ensuite être convertis numériquement/analogiquement afin de pouvoir être lus par le calculateur de vol. Un système de conversion doit donc être rajouté et intégré soit près du vitrage (faible place disponible) soit près du calculateur.

Le document WO 2017/178146 A1 décrit un vitrage feuilleté notamment d'avion, intégrant deux antennes, mais non des antennes de type recevant du sol des informations de guidage, de telles antennes étant actuellement positionnées en partie inférieure de l'avion. Le document EP 0 608 180 A1 décrit un vitrage feuilleté intégrant une antenne, mais non une antenne LOC ou une antenne GLIDE.

Les inventeurs ont donc réalisé l'invention qui, à cette fin, a pour objet un vitrage feuilleté comprenant au moins une première feuille de verre et une seconde feuille de verre collées l'une à l'autre par l'intermédiaire d'une première couche adhésive intercalaire, la première feuille de verre étant destinée à constituer la surface du vitrage feuilleté en contact avec l'atmosphère extérieure, caractérisé en ce que le vitrage feuilleté comporte, entre la première feuille de verre et la seconde feuille de verre, une antenne LOC (Localizer) recevant entre 100 et 120 MHz et une antenne GLIDE (Slope) recevant entre 320 et 340 MHz, chaque antenne étant de dimensions suffisamment faibles pour ne pas gêner la vision, voire pour être pratiquement invisible à travers le vitrage feuilleté.

Chacune des deux antennes indépendamment l'une de l'autre peut être noyée dans la première couche adhésive intercalaire ou au contraire en contact avec la face de la première ou de la seconde feuille de verre orientée vers cette couche.

L'antenne LOC (Localizer) et l'antenne GLIDE (Slope) sont réunies en une seule antenne composée d'un fil métallique conducteur de diamètre compris entre 10 et 500 µm parcourant en double une géométrie en forme de F. On entend ici et dans la suite par conducteur : conducteur d'électricité.

Par ordre de préférence croissant, le diamètre du fil métallique conducteur est au plus égal à 300, 200 et 100 µm.

Dans une configuration privilégiée notamment dans les avions commerciaux cités précédemment, le bord de la première feuille de verre est en retrait par rapport à celui de la seconde, une partie périphérique de la surface libre de la première feuille de verre, le chant de cette dernière, le chant de la première couche adhésive intercalaire et une partie de la surface de la seconde feuille de verre débordant de la première feuille de verre décrivant un contour continu en gradin qui est recouvert par un élément en gradin avec interposition de colle.

Dans cette configuration, l'élément en gradin est avantageusement conducteur et relié à la masse, les deux branches parallèles du F pointent en direction du bord du vitrage feuilleté à faible distance de celui-ci, et celle de ces deux branches située à l'extrémité du F est reliée à l'élément en gradin tandis que l'autre branche située dans une partie intermédiaire du F délivre les signaux de l'antenne LOC (Localizer) et de l'antenne GLIDE (Slope) au calculateur de vol par l'intermédiaire de moyens de conversion numérique/analogique de ces signaux.

Selon une caractéristique préférée du vitrage feuilleté de l'invention, la face de la première feuille de verre orientée vers la première couche adhésive intercalaire porte à proximité immédiate d'un de ses bords, un revêtement d'oxyde transparent conducteur en forme d'hameçon débouchant sur ce bord, et constituant une antenne GPS. Cette antenne est conçue pour fonctionner pour la réception des fréquences comprises entre 1300 et 1800 MHz environ.

La face de la première feuille de verre orientée vers la première couche adhésive intercalaire peut également porter un revêtement d'oxyde transparent conducteur chauffant de même nature que celle de l'antenne GPS, mais distinct et séparé de celle-ci d'une distance appropriée pour ne pas perturber la réception de son signal. Un tel revêtement chauffant situé au plus près de l'atmosphère extérieure dans la structure feuilletée a, de manière connue, une fonction antigivre. Le revêtement chauffant et l'antenne GPS peuvent consister en une couche mince telle qu'en or, multicouches à l'argent, oxyde d'indium dopé à l'étain (en anglais ITO pour Indium Tin Oxide), ZnO:Al, SnO :F,....

L'antenne GPS peut être formée par gravure chimique ou laser avec une forme d'hameçon, de la couche mince chauffante. Elle est ainsi transparente et de transmission lumineuse locale identique à celle du pare-brise dans la zone chauffante et pratiquement invisible de l'intérieur du cockpit. Installée sur un bord du vitrage, elle peut être située en dehors de la zone de vision du pilote, ce qui dépend de la forme/taille du vitrage.

De préférence, les sorties des antennes sont réalisées avec des tresses isolées (gaines isolantes électriques) et/ou avec des câbles tels que câbles coaxiaux et/ou avec des connecteurs plats tels que plots de contact et/ou par tout autre moyen approprié. La réalisation peut être identique à celle des sorties des sondes de température déjà intégrées dans le feuilleté.

De préférence, au regard de chaque sortie d'antenne délivrant un signal, l'élément en gradin est absent sur une largeur minimale de 2 X 20, de préférence 2 X 30 mm ; cela constitue un passage pour la sortie d'antenne, suffisamment large pour que le matériau conducteur de l'élément en gradin ne perturbe pas la transmission du signal de l'antenne.

De préférence, l'élément en gradin est recouvert par un joint d'étanchéité à l'air et à l'eau, et de protection au rayonnement solaire et aux fluides.

De préférence, l'élément en gradin est recouvert par une goutte qui procure au vitrage feuilleté une continuité aérodynamique entre vitrage et structure de montage telle que structure avion et une bonne inertie aux fluides de traitement tels que fluides aéronautiques, produits de nettoyage, dégraissant, glycol pour le dégivrage au sol et similaires.

De préférence, le vitrage feuilleté comprend au moins une troisième feuille de verre reliée à la seconde feuille de verre par une seconde couche adhésive intercalaire.

De préférence, la première feuille de verre est en verre minéral d'épaisseur comprise entre 0,5 et 5, de préférence entre 2 et 4 mm, ou en matériau polymère tel que poly(méthacrylate de méthyle) (PMMA) d'épaisseur comprise entre 0,5 et 5 mm.

De préférence, la seconde feuille de verre, et le cas échéant la troisième feuille de verre, voire les suivantes sont en verre minéral d'épaisseur comprise entre 4 et 10 mm, ou en matériau polymère tel que poly(méthacrylate de méthyle) (PMMA) d'épaisseur comprise entre 5 et 30, de préférence au plus 20 mm.

De préférence, les couches adhésives intercalaires sont en polyuréthane (PU), polyvinylbutyral (PVB), éthylène - acétate de vinyle (EVA) ou équivalent, l'épaisseur de la première couche adhésive intercalaire est comprise entre 3 et 10, de préférence 4 et 8 mm, et l'épaisseur de la seconde couche adhésive intercalaire et le cas échéant des suivantes est comprise entre 0,5 et 4, de préférence au plus égale à 2 mm.

Un autre objet de l'invention consiste en l'application d'un vitrage feuilleté tel que décrit ci-dessus à un vitrage d'aéronef pressurisé ou non pressurisé à voilure fixe ou tournante, en particulier à un vitrage d'avion commercial civil ou militaire, d'hélicoptère ou de navette spatiale, et, de manière tout à fait privilégiée, à un vitrage frontal de cockpit d'avion, dans laquelle les sorties d'antennes passent par le bord arrière du vitrage à proximité immédiate duquel les antennes sont positionnées.

Les dessins annexés illustrent l'invention :
[Fig.1] est une vue schématique de face d'un pare-brise frontal de cockpit d'avion commercial civil selon l'invention.
[Fig.2] est une vue schématique en coupe d'un tel pare-brise frontal représentant l'antenne LOC (Localizer) et l'antenne GLIDE (Slope) réunies en une seule antenne.
[Fig.3] est une vue schématique en coupe d'un tel pare-brise frontal représentant l'antenne GPS.

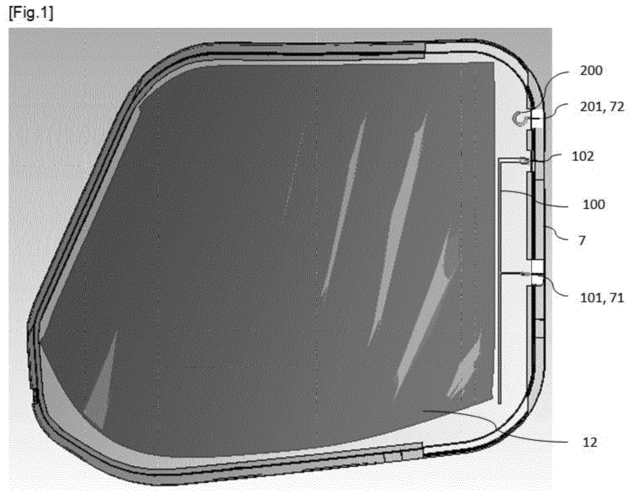

En référence à la Figure 1, un pare-brise frontal de cockpit d'avion commercial civil est équipé d'un élément périphérique en gradin 7, un revêtement d'oxyde transparent conducteur chauffant 12, une antenne LOC (Localizer) et une antenne GLIDE (Slope) réunies en une seule antenne 100 et une antenne GPS 200.

L'élément en gradin 7 est conducteur et relié à la masse. Il comporte des réserves 71, 72 de 40 mm (éventuellement 60 mm) de largeur, par lesquelles passent les sorties d'antennes 101 délivrant les signaux des antennes LOC (Localizer) et GLIDE (Slope) d'une part, et 201 délivrant le signal de l'antenne GPS d'autre part. Il n'y a ainsi aucune perturbation des signaux d'antennes dus à l'élément en gradin 7.

L'antenne 100 est composée d'un fil métallique conducteur de diamètre compris entre 10 et 500 µm parcourant en double une géométrie en forme de F. Le fil en double constituant la branche 102 située à l'extrémité du F est relié à l'élément en gradin 7, c'est-à-dire à la masse ; une découpe partielle de celui-ci 7 non apparente sur la figure est prévue à cet effet.

L'antenne GPS 200 est gravée dans le même matériau conducteur que celui de la couche chauffante 12, dont elle est suffisamment éloignée pour que celle-ci 12 ne perturbe pas la réception de l'antenne GPS 200.

Dans la suite de ces exemples, une feuille de verre désigne une feuille de verre aluminosilicate trempée chimique, commercialisée par la Société Saint-Gobain Sully sous la marque enregistrée Solidion^{®}.

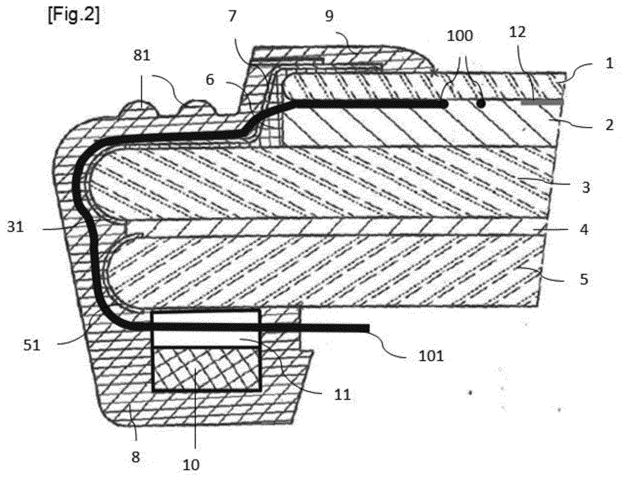

En référence à la Figure 2, le vitrage feuilleté de la Figure 1 comprend une première feuille de verre 1 constituant une face extérieure du vitrage, de 3 mm d'épaisseur, collée à une seconde feuille de verre 3 de 8 mm d'épaisseur par une première couche adhésive intercalaire 2 de polyuréthane (PU) de 5,76 mm d'épaisseur.

Une troisième feuille de verre 5 de 8 mm d'épaisseur est collée à la seconde 3 par une seconde couche adhésive intercalaire 4 de polyvinylbutyral (PVB) de 2 mm d'épaisseur.

Les chants de la seconde et de la troisième feuilles de verre 3, 5 sont protégés des chocs par des feuilles d'élastomère relativement dur 31, 51.

Le bord de la première feuille de verre 1 est en retrait par rapport à celui de la seconde 3, une partie périphérique de la surface libre de la première feuille de verre 1, le chant de cette dernière 1, le chant de la première couche adhésive intercalaire 2 et une partie de la surface de la seconde feuille de verre 3 débordant de la première feuille de verre 1 décrivant un contour continu en gradin qui est recouvert par un élément en gradin 7 en métal conducteur. L'élément métallique en gradin 7 est relié à la masse.

Ledit contour continu en gradin est recouvert par l'élément en gradin 7 avec interposition d'une épaisseur de 100 µm de colle 6 en polysulfure.

L'élément en gradin 7 est recouvert par un joint 8 d'étanchéité à l'air et à l'eau, en silicone, et par une goutte 9 en polysulfure qui procure au vitrage feuilleté une continuité aérodynamique entre vitrage et structure de montage telle que structure avion et une bonne inertie aux fluides de traitement comme déjà explicité.

La surface extérieure du joint 8 en silicone présente des lèvres d'étanchéité 81. De plus, dans la partie inférieure du joint 8 en silicone, une cale d'épaisseur 10 en matériau plus dur que le silicone est insérée de manière à garantir que le vitrage feuilleté est bien tenu dans sa position de montage, en exerçant une certaine pression, tel que par pincement. La cale d'épaisseur 10 est pleine, mais comprend des évidements 11 comme représenté sur la Figure 2, et dont la fonction sera expliquée ci-dessous.

La face de la feuille de verre 1 orientée vers l'intérieur de la structure feuilletée porte une couche chauffante 12 dont le bord est visible, constituée d'oxyde d'indium dopé à l'étain (en anglais ITO pour Indium Tin Oxide) ou équivalent tel qu'or, multicouche à l'argent, ZnO :AI, SnO₂ :F... La couche chauffante 12 est efficace pour dégivrer la surface extérieure de la feuille de verre 1.

Comme expliqué en référence à la Figure 1, l'antenne LOC (Localizer) et l'antenne GLIDE (Slope) sont réunies en une seule antenne 100 composée d'un fil métallique conducteur de diamètre compris entre 10 et 500 µm parcourant en double une géométrie en forme de F. La Figure 2 permet de visualiser, bien que schématiquement, l'écartement des deux fils de l'antenne 100 dans le plan de coupe choisi.

L'antenne 100 est composée d'un fil de cuivre de 31 µm de diamètre, de conductivité égale à 5,76 10⁷ S/m. Le verre a une permittivité relative ou constante diélectrique Eᵣ de 6,7 et une tangente delta ou facteur de dissipation diélectrique (qualifiant les pertes du matériau diélectrique) Tan d de 0,03. Pour le polyuréthane, Eᵣ vaut 2,9 et Tan d 0,2.

L'antenne 100 est représentée à l'interface entre la première feuille de verre 1 et la première couche adhésive intercalaire 2. Alternativement elle peut être noyée dans le polyuréthane 2, en l'interposant entre deux plis de polyuréthane au début du feuilletage, par exemple.

Le fil de l'antenne 100 se prolonge dans le joint 8 en silicone, devant le chant des seconde et troisième feuilles de verre 3 et 5, puis dans l'évidement 11 pratiqué à cet effet dans la cale d'épaisseur 10. La sortie d'antenne 101 de l'antenne 100 débouche du joint 8 en silicone à proximité de la face du vitrage feuilleté destinée à être orientée vers le cockpit de l'avion. La sortie d'antenne 101 est reliée au calculateur de vol via des moyens de conversion numérique/analogique non représentés des signaux de l'antenne LOC (Localizer) / GLIDE (Slope) 100.

La sortie d'antenne 101 est réalisée avec des tresses isolées (gaines isolantes électriques) ou avec des câbles (par ex DR24), notamment des câbles coaxiaux comme cela peut être fait pour les sorties des sondes de température déjà intégrées dans le feuilleté.

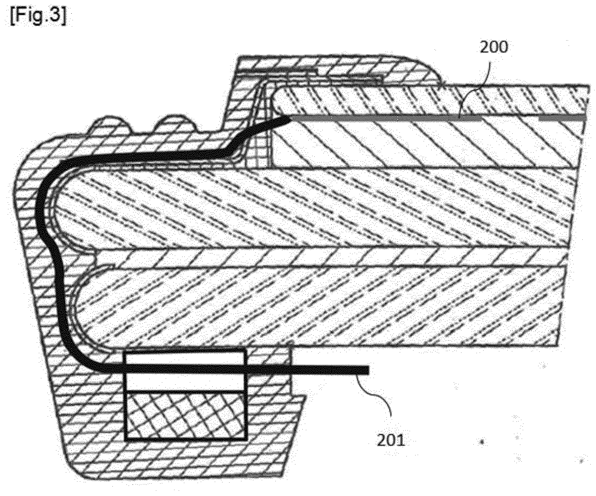

En référence à la Figure 3, l'antenne GPS 200 du vitrage feuilleté de la Figure 1 est placée à l'interface entre la première feuille de verre 1 et la première couche adhésive intercalaire 2. Elle est constituée du même matériau que celui de la couche chauffante 12 décrite en référence à la Figure 2 ci-dessus. Il s'agit d'une couche d'ITO de 800 nm d'épaisseur, ayant une conductivité de 5,5 10⁵ S/m.

Les deux antennes 100, 200 sont parfaitement fonctionnelles.

## Revendications

1. Vitrage feuilleté comprenant au moins une première feuille de verre (1) et une seconde feuille de verre (3) collées l'une à l'autre par l'intermédiaire d'une première couche adhésive intercalaire (2), la première feuille de verre (1) étant destinée à constituer la surface du vitrage feuilleté en contact avec l'atmosphère extérieure, **caractérisé en ce que** le vitrage feuilleté comporte, entre la première feuille de verre (1) et la seconde feuille de verre (3), une antenne LOC (Localizer) recevant entre 100 et 120 MHz et une antenne GLIDE (Slope) recevant entre 320 et 340 MHz, chaque antenne étant de dimensions suffisamment faibles pour ne pas gêner la vision, voire pour être pratiquement invisible à travers le vitrage feuilleté, et **en ce que** l'antenne LOC (Localizer) et l'antenne GLIDE (Slope) sont réunies en une seule antenne (100) composée d'un fil métallique conducteur de diamètre compris entre 10 et 500 µm parcourant en double une géométrie en forme de F.

2. Vitrage feuilleté selon la revendication 1, **caractérisé en ce que** le diamètre du fil métallique conducteur est au plus égal à 300 µm.

3. Vitrage feuilleté selon la revendication 2, **caractérisé en ce que** le diamètre du fil métallique conducteur est au plus égal à 200 µm.

4. Vitrage feuilleté selon la revendication 3, **caractérisé en ce que** le diamètre du fil métallique conducteur est au plus égal à 100 µm.

5. Vitrage feuilleté selon l'une des revendications précédentes, **caractérisé en ce que** le bord de la première feuille de verre (1) est en retrait par rapport à celui de la seconde (3), une partie périphérique de la surface libre de la première feuille de verre (1), le chant de cette dernière (1), le chant de la première couche adhésive intercalaire (2) et une partie de la surface de la seconde feuille de verre (3) débordant de la première feuille de verre (1) décrivant un contour continu en gradin qui est recouvert par un élément en gradin (7) avec interposition de colle (6).

6. Vitrage feuilleté selon la revendication 5, **caractérisé en ce que** l'élément en gradin (7) est conducteur et relié à la masse, **en ce que** les deux branches parallèles du F pointent en direction du bord du vitrage feuilleté à faible distance de celui-ci, et **en ce que** celle de ces deux branches (102) située à l'extrémité du F est reliée à l'élément en gradin (7) tandis que l'autre branche (101) située dans une partie intermédiaire du F délivre les signaux de l'antenne LOC (Localizer) et de l'antenne GLIDE (Slope) au calculateur de vol par l'intermédiaire de moyens de conversion numérique/analogique de ces signaux.

7. Vitrage feuilleté selon l'une des revendications précédentes, **caractérisé en ce que** la face de la première feuille de verre (1) orientée vers la première couche adhésive intercalaire (2) porte à proximité immédiate d'un de ses bords, un revêtement d'oxyde transparent conducteur en forme d'hameçon débouchant sur ce bord, et constituant une antenne GPS (200).

8. Vitrage feuilleté selon la revendication 7, **caractérisé en ce que** la face de la première feuille de verre (1) orientée vers la première couche adhésive intercalaire (2) porte un revêtement d'oxyde transparent conducteur chauffant (12) de même nature que celle de l'antenne GPS (200), mais distinct et séparé de celle-ci d'une distance appropriée pour ne pas perturber la réception de son signal.

9. Vitrage feuilleté selon l'une des revendications 6 ou 7, **caractérisé en ce que** les sorties des antennes (101, 201) sont réalisées avec des tresses isolées (gaines isolantes électriques) et/ou avec des câbles tels que câbles coaxiaux et/ou avec des connecteurs plats tels que plots de contact.

10. Vitrage feuilleté selon l'une des revendications 6 à 9 prise en combinaison avec la revendication 5, **caractérisé en ce qu'**au regard de chaque sortie d'antenne (101, 201) délivrant un signal, l'élément en gradin (7) est absent sur une largeur minimale de 2 X 20, de préférence 2 X 30 mm (71, 72).

11. Vitrage feuilleté selon l'une des revendications précédentes prise en combinaison avec la revendication 5, **caractérisé en ce que** l'élément en gradin (7) est recouvert par un joint (8) d'étanchéité à l'air et à l'eau, et de protection au rayonnement solaire et aux fluides.

12. Vitrage feuilleté selon l'une des revendications précédentes prise en combinaison avec la revendication 5, **caractérisé en ce que** l'élément en gradin (7) est recouvert par une goutte (9) qui procure au vitrage feuilleté une continuité aérodynamique entre vitrage et structure de montage telle que structure avion et une bonne inertie aux fluides de traitement tels que fluides aéronautiques, produits de nettoyage, dégraissant, glycol pour le dégivrage au sol et similaires.

13. Vitrage feuilleté selon l'une des revendications précédentes, **caractérisé en ce qu'**il comprend au moins une troisième feuille de verre (5) reliée à la seconde feuille de verre (3) par une seconde couche adhésive intercalaire (4).

14. Vitrage feuilleté selon l'une des revendications précédentes, **caractérisé en ce que** la première feuille de verre (1) est en verre minéral d'épaisseur comprise entre 0,5 et 5, de préférence entre 2 et 4 mm, ou en matériau polymère tel que poly(méthacrylate de méthyle) (PMMA) d'épaisseur comprise entre 0,5 et 5 mm.

15. Vitrage feuilleté selon l'une des revendications précédentes, **caractérisé en ce que** la seconde feuille de verre (3), et le cas échéant la troisième feuille de verre (5), voire les suivantes sont en verre minéral d'épaisseur comprise entre 4 et 10 mm, ou en matériau polymère tel que poly(méthacrylate de méthyle) (PMMA) d'épaisseur comprise entre 5 et 30, de préférence au plus 20 mm.

16. Vitrage feuilleté selon l'une des revendications précédentes prise en combinaison avec la revendication 13, **caractérisé en ce que** les couches adhésives intercalaires (2 ; 4) sont en polyuréthane (PU), polyvinylbutyral (PVB), éthylène - acétate de vinyle (EVA), **en ce que** l'épaisseur de la première couche adhésive intercalaire (2) est comprise entre 3 et 10, de préférence 4 et 8 mm, et **en ce que** l'épaisseur de la seconde couche adhésive intercalaire (4) et le cas échéant des suivantes est comprise entre 0,5 et 4, de préférence au plus égale à 2 mm.

17. Application d'un vitrage feuilleté selon l'une des revendications précédentes à un vitrage d'aéronef pressurisé ou non pressurisé à voilure fixe ou tournante.

18. Application selon la revendication 17 à un vitrage d'avion commercial civil ou militaire, d'hélicoptère ou de navette spatiale.

19. Application selon la revendication 18 à un vitrage frontal de cockpit d'avion, dans laquelle les sorties d'antennes passent par le bord arrière du vitrage à proximité immédiate duquel les antennes sont positionnées. 1

## Patentansprüche

1. Verbundverglasung, umfassend mindestens eine erste Glasscheibe (1) und eine zweite Glasscheibe (3), die aneinandergeklebt sind durch eine dazwischenliegende erste Klebstoffzwischenschicht (2), wobei die erste Glasscheibe (1) dazu vorgesehen ist, die Oberfläche der Verbundverglasung zu bilden, die in Kontakt mit der Außenatmosphäre steht, **dadurch gekennzeichnet, dass** die Verbundverglasung zwischen der ersten Glasscheibe (1) und der zweiten Glasscheibe (3) eine LOC-Antenne (Localizer), die zwischen 100 und 120 MHz empfängt, und eine GLIDE-Antenne (Slope) umfasst, die zwischen 320 und 340 MHz empfängt, wobei jede Antenne ausreichend klein bemessen ist, um die Sicht nicht zu behindern, oder um praktisch durch die Verbundverglasung hindurch unsichtbar zu sein, und dass die LOC-Antenne (Localizer) und die GLIDE-Antenne (Slope) in einer einzigen Antenne (100) vereint sind, die aus einem leitenden Metalldraht mit einem Durchmesser zwischen 10 und 500 µm besteht, die doppelt in der geometrischen Form von einem F verläuft.

2. Verbundverglasung nach Anspruch 1, **dadurch gekennzeichnet, dass** der Durchmesser des leitenden Metalldrahts höchstens gleich 300 µm beträgt.

3. Verbundverglasung nach Anspruch 2, **dadurch gekennzeichnet, dass** der Durchmesser des leitenden Metalldrahts höchstens gleich 200 µm beträgt.

4. Verbundverglasung nach Anspruch 3, **dadurch gekennzeichnet, dass** der Durchmesser des leitenden Metalldrahts höchstens gleich 100 µm beträgt.

5. Verbundverglasung nach einem der vorstehenden Ansprüche, **dadurch gekennzeichnet, dass** der Rand der ersten Glasscheibe (1) relativ zu der der zweiten (3) zurückgezogen ist, ein peripherer Teil der freien Oberfläche der ersten Glasscheibe (1), die Kante der letzteren (1), die Kante der ersten Klebstoffzwischenschicht (2) und ein Teil der Oberfläche der zweiten Glasscheibe (3), die über die erste Glasscheibe (1) hinausragt, eine kontinuierliche gestufte Kontur beschreiben, die durch ein Stufenelement (7) mit einer Einfügung von Klebstoff (6) bedeckt wird.

6. Verbundverglasung nach Anspruch 5, **dadurch gekennzeichnet, dass** das Stufenelement (7) leitend ist und mit Masse verbunden ist, dass die beiden parallelen Zweige des F in Richtung des Randes der Verbundverglasung mit geringem Abstand zu ihr zeigen, und dass die beiden Zweige (102) sich am Ende des F befinden und mit dem Stufenelement (7) verbunden sind, während sich der andere Zweig (101) in einem Zwischenteil von F befindet, der die Signale von der LOC-Antenne (Localizer) und der GLIDE-Antenne (Slope) an den Flugrechner über digital/analoge Umwandlungsmittel der Signale übermittelt.

7. Verbundverglasung nach einem der vorstehenden Ansprüche, **dadurch gekennzeichnet, dass** die Seite der ersten Glasscheibe (1), die zur ersten Klebstoffzwischenschicht (2) ausgerichtet ist, in unmittelbarer Nähe zu einer ihrer Ränder eine transparente leitende Oxidbeschichtung in Form eines Angelhakens trägt, die über den Rand hinausragt, und eine GPS-Antenne (200) bildet.

8. Verbundverglasung nach Anspruch 7, **dadurch gekennzeichnet, dass** die Seite der ersten Glasscheibe (1), die zur ersten Klebstoffzwischenschicht (2) ausgerichtet ist, eine transparente leitende heizende Oxidbeschichtung (12) von derselben Art wie die der GPS-Antenne (200) trägt, aber von ihr mit einem Abstand getrennt und abgesondert ist, der geeignet ist, um den Empfang von ihrem Signal nicht zu stören.

9. Verbundverglasung nach einem der Ansprüche 6 oder 7, **dadurch gekennzeichnet, dass** die Ausgänge der Antennen (101, 201) mit isolierten Litzen (elektrisch isolierende Ummantelungen) und/oder mit Kabeln realisiert werden, wie Koaxialkabel und/oder Fachstecker wie Kontaktstücke.

10. Verbundverglasung nach einem der Ansprüche 6 bis 9 in Kombination mit Anspruch 5, **dadurch gekennzeichnet, dass** im Hinblick auf jeden Ausgang der Antenne (101, 201), der ein Signal übermittelt, das Stufenelement (7) auf einer Mindestbreite von 2 X 20, vorzugsweise 2 X 30 mm (71, 72) abwesend ist.

11. Verbundverglasung nach einem der vorstehenden Ansprüche in Kombination mit Anspruch 5, **dadurch gekennzeichnet, dass** das Stufenelement (7) durch eine Dichtung (8) bedeckt ist, die gegen Luft und Wasser abdichtet und vor Sonnenstrahlung und Flüssigkeiten schützt.

12. Verbundverglasung nach einem der vorstehenden Ansprüche in Kombination mit Anspruch 5, **dadurch gekennzeichnet, dass** das Stufenelement (7) durch einen Tropfen (9) bedeckt ist, der auf der Verbundverglasung eine aerodynamische Kontinuität zwischen der Verglasung und der Montagestruktur, wie eine Flugzeugstruktur erzielt, und eine gute Trägheit der Prozessflüssigkeiten wie Luftfahrtflüssigkeiten, Reinigungsmittel, Entfettungsmittel, Glykol für die Bodenenteisung und ähnliches.

13. Verbundverglasung nach einem der vorstehenden Ansprüche, **dadurch gekennzeichnet, dass** sie mindestens eine dritte Glasscheibe (5) umfasst, die mit der zweiten Glasscheibe (3) durch eine zweite Klebstoffzwischenschicht (4) verbunden ist.

14. Verbundverglasung nach einem der vorstehenden Ansprüche, **dadurch gekennzeichnet, dass** die erste Glasscheibe (1) aus Mineralglas mit einer Dicke zwischen 0,5 und 5, vorzugsweise zwischen 2 und 4 mm, oder aus einem Polymermaterial wie Poly(methylmethacrylat) (PMMA) mit einer Dicke zwischen 0,5 und 5 mm besteht.

15. Verbundverglasung nach einem der vorstehenden Ansprüche, **dadurch gekennzeichnet, dass** die zweite Glasscheibe (3) und gegebenenfalls die dritte Glasscheibe (5), sogar die noch folgenden, aus Mineralglas mit einer Dicke zwischen 4 und 10 mm oder aus einem Polymermaterial wie Poly(methylmethacrylat) (PMMA) mit einer Dicke zwischen 5 und 30, vorzugsweise höchstens 20 mm, bestehen.

16. Verbundverglasung nach einem der vorstehenden Ansprüche in Kombination mit Anspruch 13, **dadurch gekennzeichnet, dass** die Klebstoffzwischenschichten (2; 4) aus Polyurethan (PU), Polyvinylbutyral (PVB), Ethylen-Vinylacetat (EVA) bestehen, dass die Dicke der ersten Klebstoffzwischenschicht (2) zwischen 3 und 10, vorzugsweise 4 und 8 mm beträgt, und dass die Dicke der zweiten Klebstoffzwischenschicht (4) und gegebenenfalls der folgenden zwischen 0,5 und 4, vorzugsweise höchstens gleich 2 mm beträgt.

17. Anwendung einer Verbundverglasung nach einem der vorstehenden Ansprüche an einer druckbeaufschlagten oder drucklosen Verglasung eines Luftfahrzeugs mit festen oder sich drehenden Tragflächen.

18. Anwendung nach Anspruch 17 an eine Verglasung eines Passagierflugzeugs oder Militärflugzeugs, Helikopters oder Spaceshuttles.

19. Anwendung nach Anspruch 18 an eine Frontverglasung eines Flugzeugs-Cockpits, wobei die Ausgänge der Antennen durch den hinteren Rand der Verglasung, in deren unmittelbarer Nähe die Antennen positioniert sind, verlaufen.

## Claims

1. Laminated glazing unit comprising at least one first sheet of glass (1) and one second sheet of glass (3) glued to one another via a first adhesive interlayer (2), the first sheet of glass (1) being intended to constitute the surface of the laminated glazing unit in contact with the outside atmosphere, **characterized in that** the laminated glazing unit comprises, between the first sheet of glass (1) and the second sheet of glass (3), an LOC (Localizer) antenna receiving between 100 and 120 MHz and a GLIDE (Slope) antenna receiving between 320 and 340 MHz, each antenna having dimensions that are sufficiently small not to obstruct vision, even to be practically invisible through the laminated glazing unit, and **in that** the LOC (Localizer) antenna and the GLIDE (Slope) antenna are combined in a single antenna (100) consisting of a conductive metal wire having a diameter of between 10 and 500 µm extending in duplicate in an F-shaped geometry.

2. Laminated glazing unit according to claim 1, **characterized in that** the diameter of the conductive metal wire is at most equal to 300 µm.

3. Laminated glazing unit according to claim 2, **characterized in that** the diameter of the conductive metal wire is at most equal to 200 µm.

4. Laminated glazing unit according to claim 3, **characterized in that** the diameter of the conductive metal wire is at most equal to 100 µm.

5. Laminated glazing unit according to any of the preceding claims, **characterized in that** the edge of the first sheet of glass (1) is set back relative to that of the second sheet of glass (3), a peripheral portion of the free surface of the first sheet of glass (1), the rim of the latter sheet of glass (1), the rim of the first adhesive interlayer (2) and a portion of the surface of the second sheet of glass (3) projecting beyond the first sheet of glass (1) describing a stepped continuous outline which is covered by a stepped element (7) with the insertion of glue (6).

6. Laminated glazing unit according to claim 5, **characterized in that** the stepped element (7) is conductive and connected to the ground, **in that** the two parallel branches of the F point toward the edge of the laminated glazing unit at a short distance therefrom, and **in that** one of these two branches (102) located at the end of the F is connected to the stepped element (7) while the other branch (101) located in an intermediate portion of the F delivers the signals from the LOC (Localizer) antenna and from the GLIDE (Slope) antenna to the flight computer via means for the digital/analog conversion of these signals.

7. Laminated glazing unit according to any of the preceding claims, **characterized in that** the face of the first sheet of glass (1) oriented toward the first adhesive interlayer (2) bears, in immediate proximity to one of its edges, a coating of conductive transparent oxide in the form of a fishhook opening onto this edge, and constituting a GPS antenna (200).

8. Laminated glazing unit according to claim 7, **characterized in that** the face of the first sheet of glass (1) oriented toward the first adhesive interlayer (2) bears a coating of heating conductive transparent oxide (12) of the same nature as that of the GPS antenna (200), but distinct and separate therefrom by a suitable distance so as not to disrupt the reception of its signal.

9. Laminated glazing unit according to one of claims 6 or 7, **characterized in that** the outputs of the antennas (101, 201) are made with insulated braids (electrical insulating sheaths) and/or with cables such as coaxial cables and/or with flat connectors such as contact pads.

10. Laminated glazing unit according to any of claims 6 to 9, taken in combination with claim 5, **characterized in that** opposite each antenna output (101, 201) delivering a signal, the stepped element (7) is absent over a minimum width of 2 X 20, preferably 2 X 30 mm (71, 72).

11. Laminated glazing unit according to any of the preceding claims, taken in combination with claim 5, **characterized in that** the stepped element (7) is covered by an air- and water-tight seal (8) which protects against solar radiation and fluids.

12. Laminated glazing unit according to any of the preceding claims, taken in combination with claim 5, **characterized in that** the stepped element (7) is covered by a bead (9) which provides the laminated glazing unit with aerodynamic continuity between glazing unit and mounting structure such as an airplane structure and good inertia to the treatment fluids such as aeronautical fluids, cleaning products, degreasing agent, glycol for deicing on the ground and the like.

13. Laminated glazing unit according to any of the preceding claims, **characterized in that** it comprises at least one third sheet of glass (5) connected to the second sheet of glass (3) by a second adhesive interlayer (4).

14. Laminated glazing unit according to any of the preceding claims, **characterized in that** the first sheet of glass (1) is made of mineral glass having a thickness of between 0.5 and 5, preferably between 2 and 4 mm, or is made of a polymer material such as poly(methyl methacrylate) (PMMA) having a thickness of between 0.5 and 5 mm.

15. Laminated glazing unit according to any of the preceding claims, **characterized in that** the second sheet of glass (3) and, if applicable, the third sheet of glass (5), even the subsequent ones, are made of mineral glass having a thickness of between 4 and 10 mm, or are made of a polymer material such as poly(methyl methacrylate) (PMMA) having a thickness of between 5 and 30, preferably at most 20 mm.

16. Laminated glazing unit according to any of the preceding claims, taken in combination with claim 13, **characterized in that** the adhesive interlayers (2; 4) are made of polyurethane (PU), polyvinyl butyral (PVB), ethylene-vinyl acetate (EVA), **in that** the thickness of the first adhesive interlayer (2) is between 3 and 10, preferably 4 and 8 mm, and **in that** the thickness of the second adhesive interlayer (4) and, if applicable, of the subsequent layers, is between 0.5 and 4, preferably at most equal to 2 mm.

17. Application of a laminated glazing unit according to any of the preceding claims to a glazing unit of a pressurized or non-pressurized aircraft having fixed or rotating wings.

18. Application according to claim 17 to a glazing unit of a civilian commercial or military aircraft, helicopter or space shuttle.

19. Application according to claim 18 to an aircraft cockpit front-end glazing unit, wherein the antenna outputs pass through the rear edge of the glazing unit in immediate proximity to which the antennas are positioned.
